(19)

Europäisches
Patentamt
European
Patent Office
Office européen
des brevets

(11) **EP 3 418 768 A1**

(12) **EUROPEAN PATENT APPLICATION**

(43) Date of publication:
**26.12.2018  Bulletin 2018/52**

(51) Int Cl.:
**G01S 13/34** (2006.01)    **G01S 13/87** (2006.01)
**G01S 7/40** (2006.01)     **G01S 7/35** (2006.01)
**G01S 13/00** (2006.01)    *G01S 13/93* (2006.01)

(21) Application number: **17176781.7**

(22) Date of filing: **20.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Veoneer Sweden AB
447 83 Vårgårda (SE)**

(72) Inventors:
• **POIGER, Walter
  97616 Bad Neustadt (DE)**
• **MAISEL, Juergen
  85567 Grafing bei Muenchen (DE)**

(74) Representative: **Sandstedt, Jonas Sven James
WESTPATENT AB
Almekärrsvägen 11
443 39 Lerum (SE)**

(54)    **A VEHICLE RADAR SYSTEM COMPRISING TWO RADAR SENSOR ARRANGEMENTS**

(57)    The present disclosure relates to a vehicle radar system (3) comprising a main control unit (38), a first radar sensor arrangement (4a) and a second radar sensor arrangement (4b), separated by a certain distance (d) and comprise a corresponding transmitter and receiver antenna arrangement (10a, 10b; 13a, 13b). Each receiver antenna arrangement (13a, 13b) has a corresponding receiver antenna radiation beam (47a, 47b) with a corresponding beam pointing azimuth angle ($\varphi_1$, $\varphi_2$) relative a forward direction (F) in a corresponding maximum gain extension (46a, 46b). The maximum gain extension (46a, 46b) converge for beam pointing azimuth angles exceeding 0°. Each radar sensor arrangement (4a, 4b) is arranged for generating, transmitting and receiving radar signals (6a, 6b) in radar cycles. The radar signals (6a, 6b) are transmitted during a common time period for a major part of each radar cycle, where information regarding the time for transmission of each plurality of radar signals (6a, 6b) is obtained for each radar sensor arrangement (4a, 4b).

FIG. 1

EP 3 418 768 A1

**Description**

DESCRIPTION OF THE DISCLOSURE

The present disclosure relates to a vehicle radar system comprising a main control unit, a first radar sensor arrangement and a second radar sensor arrangement that are arranged to be mounted at the front of a vehicle. Each radar sensor arrangement comprises a corresponding transmitter antenna arrangement (and corresponding receiver antenna arrangement.

Many vehicle radar systems comprise a forward-looking radar transceiver comprised in a forward-looking radar sensor arrangement as singular radar solution or in combination with a camera system (Mono or Stereo) to detect obstacles like cars, motorcycles, bicycles or pedestrians. Two corner radar transceivers comprised in corresponding corner radar sensor arrangements may additionally be installed as well. The detections of all sensors will be fused to tracked objects, which are used for functions like i.e. Autonomous Emergency Braking (AEB) or for Adaptive Cruse Control (ACC). The fusion of those objects can be performed by a control unit located in one of the radar sensor arrangements, or in a centralized RCU (Radar Control Unit) or ADAS (Advanced Drive Assistance System) control unit.

Forward-looking radar transceiver characteristics are for example to have a long-range mode, approximately 250m and a FoV (Field of View) angle of about $\pm 9°$, and a short-range mode, approximately 50m to 60m, with a FOV of about $\pm 45°$ to $\pm 70°$. These characteristics are of course only examples, depending on the physical limitation of the antenna construction.

To determine objects in the adjacent lane, an angular resolution of about 1,5° or better is required. In addition, an elevation information is required to identify obstacles in elevation such as for example a bridge below which a vehicle can pass.

According to state of the art, long range radar systems have a typical antenna configuration with four transmitting (TX) antennas 2 x 6 receiving (RX) antennas to achieve the required range and the angular resolution, and requires several MMICs (Monolithic Microwave Integrated Circuits) usually separated as RX and TX chips, or using combined TX/RX Chips which can be cascaded.

It would be desirable to have a less complicated arrangement that still provides an adequate coverage with regard to the required FoV and range, combining a wide FoV in short-range mode and a wide range in boresight of the vehicle in mid-range mode.

The object of the present disclosure is to provide a dual sensor radar system in a slim package size combining the FoV in short range and the long range mode in boresight of the vehicle.

This object is obtained by means of a vehicle radar system comprising a main control unit, a first radar sensor arrangement and a second radar sensor arrangement. The radar sensor arrangements are arranged to be mounted at the front of a vehicle arranged to run along a forward direction, where the radar sensor arrangements are separated by a certain distance and comprise a corresponding transmitter antenna arrangement and corresponding receiver antenna arrangement. Each receiver antenna arrangement has a corresponding receiver antenna radiation beam with a corresponding beam pointing azimuth angle relative the forward direction in a corresponding maximum gain extension, where the beam extensions converge for beam pointing azimuth angles exceeding 0°. Each radar sensor arrangement is arranged for generating and transmitting radar signals in radar cycles, and to receive reflected signals, where the transmitted radar signals have been reflected by an object. The radar sensor arrangements are arranged to transmit the radar signals during a common time period for a major part of each radar cycle, where the main control unit is arranged to obtain information regarding the time for transmission of each plurality of radar signals for each radar sensor arrangement.

This object is also obtained by means of a method for a vehicle radar system, where the method comprises:

- Generating at least two receiver antenna radiation beams with a corresponding beam pointing azimuth angle relative a forward direction in a corresponding maximum gain extension, where the beam extensions converge for beam pointing azimuth angles exceeding 0°.
- Generating and transmitting radar signals in radar cycles.
- Receiving reflected signals, where the transmitted radar signals have been reflected by an object.
- Transmitting the radar signals during a common time period for a major part of each radar cycle.
- Obtaining information regarding the time for transmission of each plurality of radar signals for each radar sensor arrangement.

According to some aspects, the beam pointing azimuth angles have a respective value between 0° and 1.5°.

According to some aspects, the beam pointing azimuth angles have a respective value between 0° and 0.5°.

According to some aspects, each radar sensor arrangement is arranged for generating and transmitting FMCW (Frequency Modulated Continuous Wave) chirp signals, where each radar cycle comprises a plurality of chirp signals.

According to some aspects, the main control unit is arranged to insert at least one identifiable data signal for each radar cycle.

According to some aspects, each identifiable data signal comprises a time indication.

According to some aspects, the main control unit is arranged to control the coherency of the received reflected signals by means of said identifiable data signals.

According to some aspects, the vehicle radar system comprises a main clock that is arranged as a system clock for the main control unit. Each radar sensor arrangement comprises a corresponding local clock and a corresponding local control unit.

According to some aspects, the main control unit is arranged to control a phase difference between the received radar signals for synchronization to enable coherency control of the received radar signals in time domain or frequency domain.

According to some aspects, the main control unit is arranged to combine the two receiver antenna radiation beams such that an overlap area is provided, where the overlap area enables overlap processing.

Other examples are disclosed in the dependent claims.

A number of advantages are obtained by means of the present disclosure. For example:

- Two small radar sensors in the vehicle front are needed
- A physically extended aperture of the radar transceivers is obtained, which leads to a higher angular resolution in the overlap FoV area.
- Multi-path effects are at least significantly reduced.

BRIEF DESCRIPTION OF THE DRAWINGS

The present disclosure will now be described more in detail with reference to the appended drawings, where:

Figure 1    shows a schematic top view of a vehicle;
Figure 2    shows a simplified schematic of a vehicle radar system;
Figure 3    shows a chirp signal;
Figure 4    shows a simplified schematic of a transmitter arrangement and receiver arrangement;
Figure 5    shows transmitter antenna devices in a first mode of operation;
Figure 6    shows transmitter antenna devices in a second mode of operation;
Figure 7    shows a first antenna radiation pattern;
Figure 8    shows a second antenna radiation pattern;
Figure 9    shows a graph of additive sensing ratio (ASR);
Figure 10   shows a simplified view of four receiver antenna devices; and
Figure 11   shows a flowchart for a method according to the present disclosure.

DETAILED DESCRIPTION

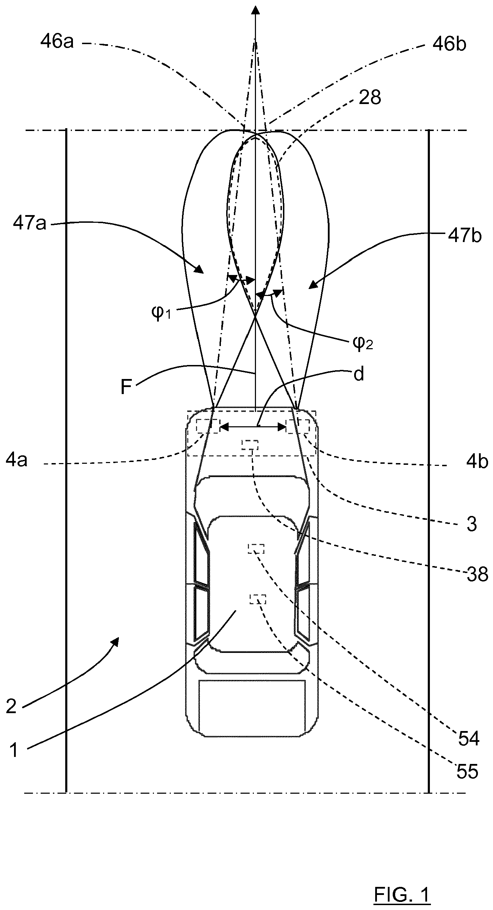

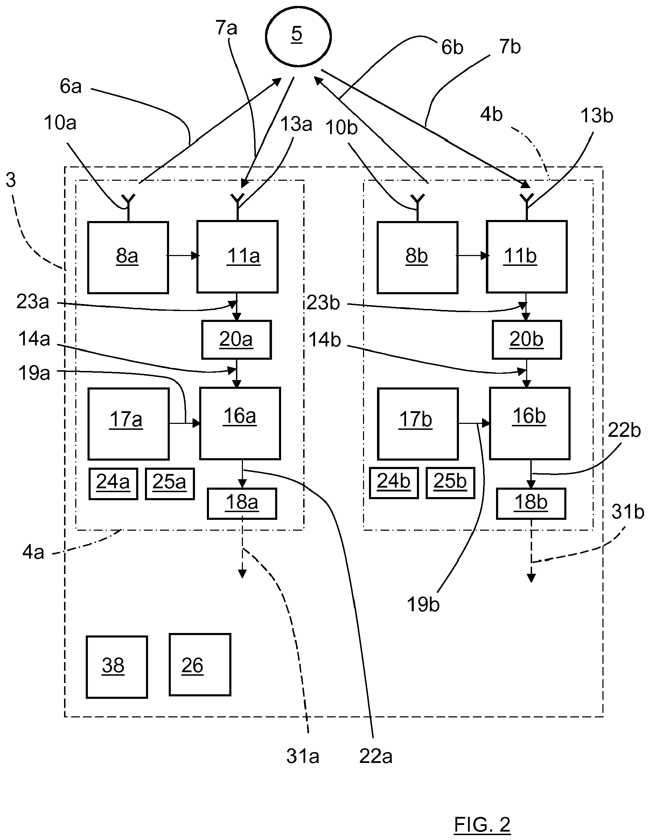

Figure 1 schematically shows a top view of a vehicle 1 arranged to run on a road 2 in a forward direction F, where the vehicle 1 comprises a vehicle radar system 3. The vehicle radar system 3 comprises a first radar sensor arrangement 4a and a second radar sensor arrangement 4b. With reference also to Figure 2, showing a simplified schematic of radar system 3, the radar sensor arrangements 4a, 4b are arranged to distinguish and/or resolve single targets from the surroundings by transmitting signals 6a, 6b and receiving reflected signals 7a, 7b and using a Doppler effect in a previously well-known manner. The vehicle radar system 3 further comprises a main control unit 38 that is connected to the radar sensor arrangements 4a, 4b and is arranged to provide azimuth angles of possible target objects 5 by simultaneously sampling and analyzing phase and amplitude of the received signals 7a, 7b. The radar sensor arrangements 4a, 4b are separated by a distance d that according to some aspects is about one meter.

In principle, the radar sensor arrangements 4a, 4b are not limited to azimuth detection capabilities it also applies to radar antenna designs which covers horizontal and vertical FoV (Field of View).

As shown in Figure 2, the vehicle radar system 3 comprises a first radar sensor arrangement 4a and a second radar sensor arrangement 4b, where each radar sensor arrangement 4a, 4b is arranged for generating and transmitting sweep signals in the form of FMCW (Frequency Modulated Continuous Wave) chirp signals 6a, 6b of a previously known kind, and to receive reflected signals 7a, 7b, where the transmitted chirp signals 6a, 6b have been reflected by an object 5.

The first radar sensor arrangement 4a comprises a first transmitter arrangement 8a with a first transmitter antenna arrangement 10a, a first receiver arrangement 11a with a first receiver antenna arrangement 13a, a first Analog to Digital Converter (ADC) arrangement 16a and a first sampling and timing arrangement 17a. Correspondingly, the second radar sensor arrangement 4b comprises a second transmitter arrangement 8b with a second transmitter antenna arrangement 10b, a second receiver arrangement 11b with a second receiver antenna arrangement 13b, a second ADC arrangement 16b and a second sampling and timing arrangement 17b.

The first radar sensor arrangement 4a further comprises a first local clock 24a and a first local control unit 25a, and the second radar sensor arrangement 4b comprises a second local clock 24b and a second local control unit 25b. Each local clock 24a, 24b is arranged as a system clock for the corresponding local control unit 25a, 25b. Each local control unit 25a, 25b comprises an appropriate bus interface circuit or a fully integrated solution.

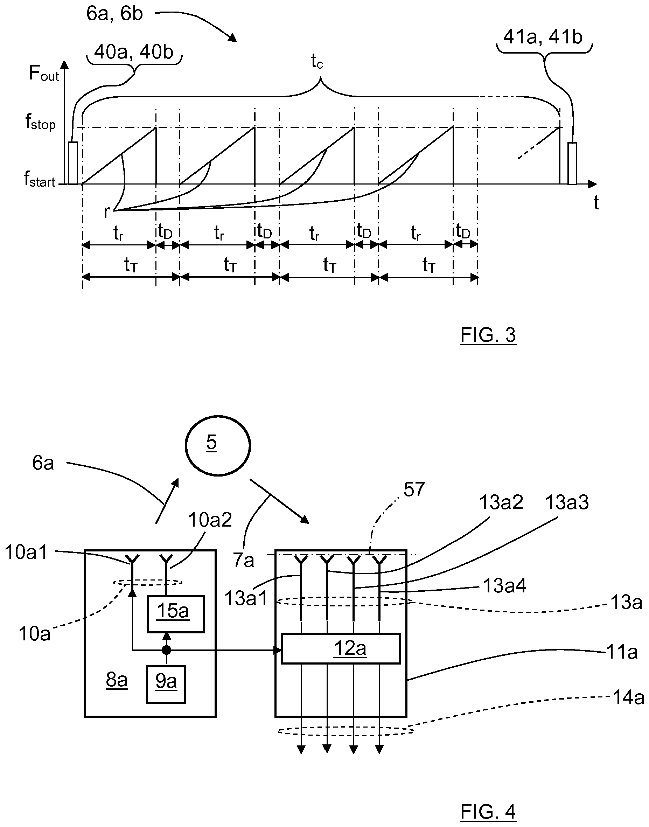

As shown in Figure 3, a transmitted FMCW chirp signal 6a, 6b is in the form of a continuous sinusoid where the output frequency $F_{out}$ varies from a first frequency $f_{start}$ to a second frequency $f_{stop}$ over the course of a ramp r, where each chirp signal 6a, 6b comprises repeating cycles of a plurality of frequency ramps r. There the magnitude of the first frequency $f_{start}$ falls below the magnitude of the second frequency $f_{stop}$.

A cycle for a chirp signal 6a, 6b lasts for a certain cycle time $t_c$ corresponding to a radar cycle, each ramp r lasts a certain ramp time $t_r$, having a ramp period time $t_T$. Between two consecutive ramps of the chirp signal 4a, 4b there is a delay time $t_D$. The FMCW chirp signals 6a, 6b may be transmitted with a mutual time difference, such that they are transmitted in an interleaved manner, but they are to a major part transmitted during a common time period for each radar cycle.

Referring to Figure 2, the reflected signals 7a, 7b are received by the receivers 11a, 11b via the receiver antenna arrangements 13a, 13b. The received signals 7a, 7b, thus constituted by reflected radar echoes, are then mixed with the transmitted chirp signals 6a, 6b in the receivers 11a, 11b.

In this way, IF (Intermediate Frequency) signals 23a, 23b are acquired are acquired and filtered in corresponding IF filters 20a, 20b such that filtered IF signals 14a, 14b are acquired.

The difference frequency of the filtered IF signals 14a, 14b relates to the target distance and are transferred to the corresponding ADC arrangement 16a, 16b, where the filtered IF signals 14a, 14b are sampled at a certain predetermined sampling frequency $f_s$ and converted to digital signals 22a, 22b, the sampling frequency $f_s$ being provided in the form of a sampling and timing signal 19a, 19b produced by the corresponding sampling and timing arrangement 17a, 17b.

Each radar sensor arrangement 4a, 4b further comprises a DSP (Digital Signal Processor) arrangement 18a, 18b that is adapted for radar signal processing by means of a first FFT (Fast Fourier Transform) to convert the digital signals 22a, 22b to a range domain, and a second FFT to combine the results from successive chirp signal ramps into the Doppler domain. The two-dimensional spectrum of the Range-Doppler matrices that results, or the raw ADC data without pre-processing, are forwarded for further computation as indicated with dashed arrows 31a, 31b.

The main control unit 38 is arranged to control the working of certain components in the vehicle radar system 3, where the vehicle radar system 3 further comprises a main clock 26 that is arranged as a system clock for the main control unit 38.

In Figure 4, the first transmitter arrangement 8a and the first receiver arrangement 11a are shown more in detail; it is to be understood that the second transmitter arrangement 8b and the second receiver arrangement 11b have a similar design.

The first transmitter arrangement 8a comprises a signal generator 9a that is arranged to generate FMCW (Frequency Modulated Continuous Wave) chirp signals as described previously. The first transmitter antenna arrangement 10a comprises a first transmitter antenna device 10a1 and a second transmitter antenna device 10a2, each transmitter antenna device 10a1, 10a2 either being constituted by one antenna element or by an array of antenna elements. The transmitter antenna devices 10a1, 10a2 are spatially separated by a distance $d_1$ that according to some aspects is about $\lambda/2$, where $\lambda$ is a free-space wavelength corresponding to the frequency band used for the transmitted signals.

The first receiver arrangement 11a comprises a receiver mixer 12a and the first receiver antenna arrangement 13a comprises a first receiver antenna device 13a1, a second receiver antenna device 13a2, a third receiver antenna device 13a3 and a fourth receiver antenna device 13a4. In the same way as for the transmitter antenna devices 10a1, 10a2, each receiver antenna device 13a1, 13a2, 13a3, 13a4 may be constituted by one antenna element or by an array of antenna elements. The receiver antenna devices 13a1, 13a2, 13a3, 13a4 are spatially separated by a distance $d_2$ that according to some aspects is about $1.5\lambda$ - $2\lambda$.

The transmitted signals 6a, 6b are reflected at the target object 5, and the reflected signals 7a, 7b are received by the receiver arrangement 11a. The received signals 7a, 7b, thus constituted by reflected radar echoes, are mixed with the transmitted signal 6a, 6b in the receiver mixer 12, such that the four corresponding IF (Intermediate Frequency) signals 14 are acquired. The difference frequency of the resulting IF signals relates to the target distance. These IF signals are later filtered as described previously with reference to Figure 2. With reference also to Figure 1, each receiver antenna device 13a1, 13a2, 13a3, 13a4 has a corresponding boresight extension, here constituting a maximum gain extension 46a, 46b that is perpendicular to an antenna plane 57.

With reference also to Figure 1, each receiver antenna arrangement 13a, 13b has a corresponding receiver antenna radiation beam 47a, 47b with a corresponding beam pointing azimuth angle ($\varphi_1$, $\varphi_2$ relative the forward direction F in the corresponding maximum gain extension 46a, 46b. The beam pointing azimuth angles $\varphi_1$, $\varphi_2$ have a respective value close to zero, but the maximum gain extension 46a, 46b should eventually converge in front of the vehicle 1.

According to some aspects, the beam pointing azimuth angles $\varphi_1$, $\varphi_2$ have a respective value between 0° and 1.5°, where the maximum gain extension 46a, 46b converge for beam pointing azimuth angles $\varphi_1$, $\varphi_2$ exceeding 0°.

According to the present disclosure, the radar sensor arrangements 4a, 4b are arranged to transmit the chirp signals 6a, 6b during a common time period, i.e. more or less simultaneously, to a major part for each radar cycle. According to some aspects, the chirp signals 6a, 6b are transmitted simultaneously for each radar cycle. The main control unit 38 is arranged to obtain information regarding the time for transmission of each plurality of chirp signals 6a, 6b for each radar sensor arrangement 4a, 4b.

This is necessary when the chirp signals are transmitted simultaneously, since a coherent and synchronously controlled transmission is desirable in this case. As better the coherence of the received radar signals can be controlled as better the improvement in range and gained SNR are. A received and synchronized coherent raw radar signal will then be processed by means of signal processing algorithms in the main control unit 38. The radar signal processing will according to some aspects compute detections which might comprise overlap processing techniques and furthermore build tracked objects with extremely low latency time between the individual radar sensor arrangements 4a, 4b. All other or following computation steps are applied in the known way.

Regarding the overlap processing mentioned above, the combination of the two receiver antenna radiation beams 47a, 47b provides an overlap area 28 as shown in Figure 1, where the overlap area 28 is used for overlap processing. In this context, overlap processing means that both receiver antenna radiation beams 47a, 47b are overlaid to improve the quality of the combined radar picture. This works best with capturing raw data from both radar sensor arrangements 4a, 4b simultaneously, which means virtually coherent. The main control unit 38 is according to some aspects arranged to process raw data of each radar sensor arrangement 4a, 4b separately.

According to a first example, this is achieved by means of the main control unit 38 that is arranged to insert at least one identifiable data signal 40a, 40b; 41a, 41b for each radar cycle as shown in Figure 3.

Such a data signal is according to some aspects of such a kind that it easily can be identified in the received signal due to its shape or other special characteristics.

According to some aspects, such a data signal is constituted by a time stamp which clearly identifies the chirp signals included in each radar cycle. The time stamp can be used to identify the exact chirp time relative to a trigger event, e.g. a hardware radar cycle start signal, or a kind of real time number with the appropriate resolution. To further improve the coherency, a combination of the above could be used as final solution. All above described techniques allows the main control unit 38 controlling computing unit to retrieve the time when a chirp signal sequence has been sent out. The time stamp is generally constituted by a time indication that includes time-stamping on data frames of raw data of MMIC (Monolithic Microwave Integrated Circuits).

According to a second example, this is achieved by means of the main control unit 38 that is arranged to synchronize the local clocks 24a, 24b by using the main clock 26.

The long range and angular resolution is achieved by separation of the radar sensor arrangements 4a, 4b which are mounted in the front of the vehicle with the distance d, increasing the physical aperture and providing a higher angular resolution.

Both radar sensor arrangements 4a, 4b provide their raw data via high speed bus link to the main control unit 38. The overlap area 28 improves the angular resolution, eliminates multi-path effects and extend the range.

According to some aspects, the main control unit 38 is arranged to control a phase difference between the received radar signals 7a, 7b for synchronization to enable coherency control of the received radar signals 7a, 7b, either in time domain or frequency domain.

According to some aspects, the main control unit 38 is arranged to process the raw data of each radar sensor arrangement 4a, 4b separately.

Additionally, the detections can be calculated on the combined raw data of the sensor pair which provides the lowest possible level for sensor data fusion.

In the following a more detailed example of the transmitter arrangement 8a, 8b and the receiver arrangements 11a, 11b will be provided. Only the first transmitter arrangement 8a and the first receiver arrangements 11a will be discussed, but it is again to be understood that the second transmitter arrangement 8b and the second receiver arrangement 11b have a similar design.

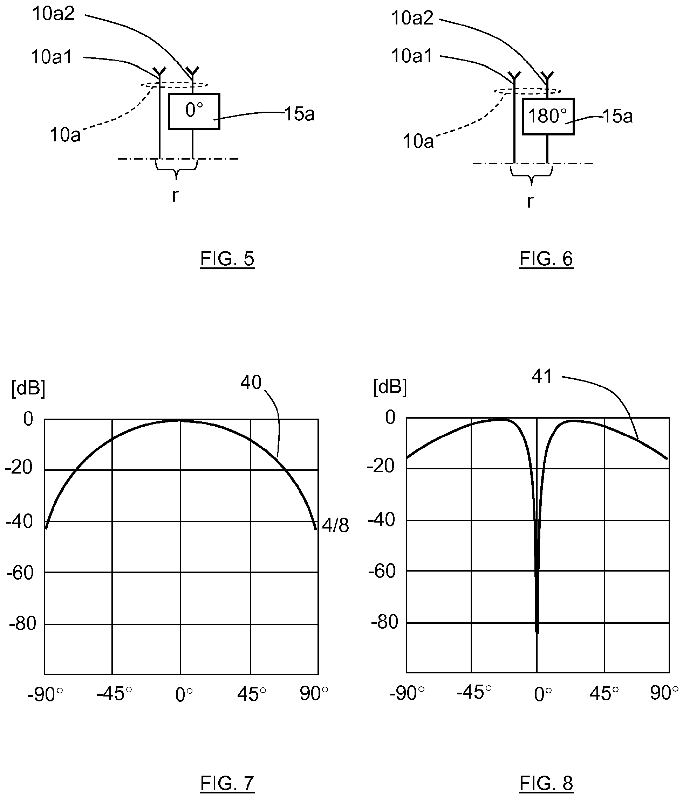

With reference to Figure 4, Figure 5 and Figure 6, the first transmitter arrangement 8a further comprises a phase switch 15a connected between the signal generator 9a and the second transmitter antenna device 10a2. The phase switch 15 is arranged to switch between 0° phase shift, as illustrated in Figure 5 and Figure 7, and 180° phase shift, as illustrated in Figure 6 and Figure 8.

Figure 7 shows a first relative antenna radiation pattern 40 with magnitude in dB on the y-axis and azimuth angle on the x-axis. Figure 8 shows a second relative antenna radiation pattern 41 with magnitude in dB on the y-axis and azimuth angle on the x-axis. The relative antenna radiation patterns 40, 41 are to be regarded as indicative of a principle, not as mathematically exact.

With the phase switch 15a in the 0° setting as illustrated in Figure 5, the radiated energy is focused towards boresight, at 0° in the first relative antenna radiation pattern 40 in Figure 7, which constitutes a sum pattern 40. With the phase switch 15a in the 180° setting as illustrated in Figure 6, the radiated energy has a deep notch in boresight, at 0° in the second relative antenna radiation pattern diagram 41 in Figure 8, which constitutes a delta pattern 41.

In the latter case, the pole at 0° in the delta pattern 41 is important to distinguish object position from being on the left or right side of the first radar sensor arrangement 4a.

The sum pattern 40 is thus obtained by feeding both transmitter antenna devices 10a1, 10a2 in phase, while the delta pattern 41 is obtained feeding both transmitter antenna devices 10a1, 10a2 out of phase with each other, here with a mutual 180° phase difference.

It is desirable that side lobes, including grating lobes, are suppressed as much as possible.

When a target object 5 has been detected, its delta azimuth angle in the delta pattern 41 will be estimated. Furthermore, it is supposed that the complex amplitude of the target object 5 is available for both the sum pattern 40 and the delta pattern 41.

A bearing calculation will be based on the theory of an amplitude-sensing monopulse (ASM). The name derives from the fact that the method is theoretically capable of obtaining a target object's angles using only one (mono) pulse. It uses the amplitude characteristic (magnitude) of its antenna pattern to determine an angular position of a detected target object. Due to the sum pattern 40 and the delta pattern 41 being mirror-symmetric to its corresponding boresight, the phase conditions are used to obtain the sign of the azimuth angle of the target object 5.

An additive sensing ratio (ASR) is defined as:

$$ASR = \frac{M_\Delta - M_\Sigma}{M_\Delta + M_\Sigma}. \qquad (1)$$

Here, $M_\Sigma$ corresponds to the magnitude of the sum pattern 40, and $M_\Delta$ corresponds to the magnitude of the delta pattern 41. With reference to Figure 5, the ASR 42 is schematically indicated as a function of azimuth angle. Note that the symmetric antenna characteristics imply that the corresponding ASR function does not behave strictly monotonic. Consequently, a unique angle cannot be assigned to a particular ASR phase. The phase characteristics of the relative antenna radiation patterns 40, 41 are therefore used to determine a unique angle.

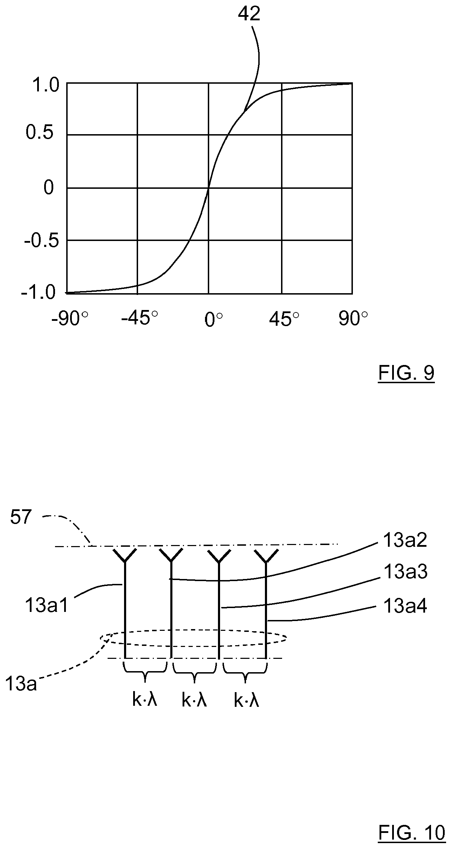

With reference to Figure 10, showing the first receiver antenna arrangement 13a that comprises the first receiver antenna device 13a1, the second receiver antenna device 13a2, the third receiver antenna device 13a3 and the fourth receiver antenna device 13a4, there is a certain spacing $k \cdot \lambda$ between adjacent receiver antenna devices 13a1, 13a2, 13a3, 13a4. $\lambda$ is a wavelength corresponding to a center frequency of a desired frequency band, and k is a constant that is chosen for desired functionality.

Said spacing $k \cdot \lambda$ has an important significance for the antenna design. On the one hand, a high degree of angular resolution and accuracy is desired, which requires a large antenna distance. On the other hand, a high degree of unambiguous range is also desire, which requires a relatively small antenna spacing. In some cases, both resolution and accuracy may be reduced in favor of a reasonable unambiguous range.

In practice, additional restrictions arise from a relatively small antenna aperture. First to mention would be an undesired crosstalk between the receiver antenna devices 13a1, 13a2, 13a3, 13a4. The intensity of this crosstalk follows inherently a function of the antenna separation. This behavior may create unpredictable nonlinearities in the bearing processing. Another disadvantage of a relatively small antenna aperture is limited antenna gain, and consequently the SNR of the received signal.

Another aspect of the antenna design is the influence of the vehicle environment, such as for example bumper integration or a further radome with or without heating, on the radar performance. A variety of factors should therefore be considered; for example uncontrolled wave propagation, unintentional mode creation, etc. All of these effects also have negative impact on the processing. However, a relatively large antenna spacing mitigate some harmful external effects.

According to some aspects, the constant k is chosen to be about 1.5 - 2.0.

With reference to Figure 5 and Figure 6, for the adjacent transmitter antenna device 10a1, 10a2 there is a spacing r that according to some aspects has a magnitude of about $0.5 \cdot \lambda$.

Exactly how data processing is accomplished in practice may vary, the example disclosed above is only an example, and the processing may be performed in any suitable processing unit.

Each control unit 25a, 25b; 38 may be comprised by one or more separate or integrated control units, e.g. SoCs (System-on-Chips).

As indicated in Figure 1, the vehicle 1 comprises a safety control unit 54 and safety means 55, for example an emergency braking system and/or an alarm signal device. The safety control unit 54 is arranged to control the safety means 55 in dependence of input from the radar system 3. Such input may be input via the main control unit 38.

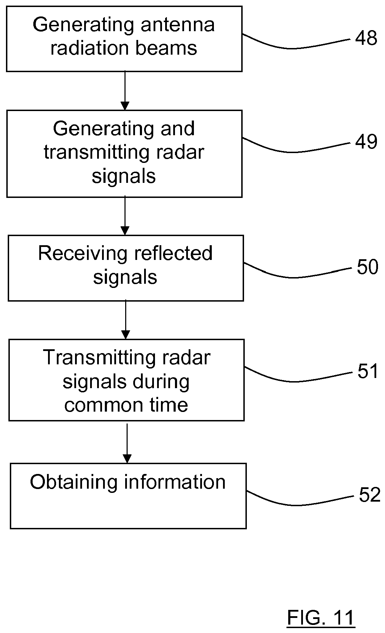

With reference to Figure 11, the present disclosure also relates to a method for a vehicle radar system 3, where the method comprises:

48: Generating at least two receiver antenna radiation beams 47a, 47b with a corresponding beam pointing azimuth angle $\varphi_1$, $\varphi_2$ relative a forward direction F in a corresponding maximum gain extension 46a, 46b, where the maximum gain extension 46a, 46b converge for beam pointing azimuth angles $\varphi_1$, $\varphi_2$ exceeding 0°.

49: Generating and transmitting radar signals 6a, 6b in radar cycles.

50: Receiving reflected signals 7a, 7b, where the transmitted chirp signals 6a, 6b have been reflected by an object 5.

51: Transmitting the radar signals 6a, 6b during a common time period for a major part of each radar cycle.

52: Obtaining information regarding the time for transmission of each plurality of radar signals 6a, 6b for each radar sensor arrangement 4a, 4b.

The present disclosure is not limited to the examples above, but may vary freely within the scope of the appended claims. For example, the ramp time $T_r$ does not have to be the same for the first chirp signal 4a and the second chirp signal 4b.

Each ramp may be configured as an up-ramp as described, or a down-ramp, or some combination of both such as saw-tooth. The magnitude of the first frequency $f_{start}$ may thus exceed the magnitude of the second frequency $f_{stop}$.

Other kinds of FMCW signals and FMCW signal configurations are also conceivable, as well as other types of Doppler radar signals. Other types of radar systems are also conceivable; not only FMCW radar systems are conceivable. Pulse radar, FSK (frequency-shift keying) or CW (continuous wave) waveform are also conceivable like all other kinds of suitable modulation techniques.

Furthermore, there may be any number of transmitter antenna devices 10a1, 10a2 and receiver antenna devices 13a1, 13a2, 13a3, 13a4, but there is at least two transmitter antenna devices for each transmitter antenna arrangement 10a, 10b and at least two receiver antenna devices for each receiver antenna arrangement 13a, 13b.

Each antenna device 10a1, 10a2; 13a1, 13a2, 13a3, 13a4 may for example be constituted by one antenna element or by an array of antenna elements.

The radar system may be implemented in any type of vehicle such as cars, trucks and buses as well as boats and aircraft.

The schematics of vehicle radar systems are simplified, only showing parts that are considered relevant for an adequate description of the present disclosure. It is understood that the general design of radar systems of this kind is well-known in the art.

Furthermore, no devices that are arranged to use the acquired target information are shown, but many different such devices are of course conceivable; for example a warning and/or collision avoidance system.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Generally, the hardware used to generate the radar signal may be arranged to be powered down when it is not needed.

Beamforming may be used, for example in the form of digital beamforming (DBF) but other types of beamforming are conceivable. According to an aspect, an ASM transmitter is combined with an analog beamforming receiver. In this case the steering would be achieved with phase-shifter components in between the antenna elements. This technique is also known as 'Phased Array Radar'.

When a phase shift of 180° is mentioned, the mathematically exact figure is not intended, but a phase shift within what is practically obtainable that provides a sum pattern 40 and a delta pattern 41. Therefore, in practice, for delta pattern signals, radar signals 6a, 6b are arranged to be transmitted from at least a first transmitting antenna device 10a1 out of phase with radar signals 6a, 6b arranged to be transmitted from at least a second transmitting antenna device 10a2.

According to some aspects, only one type of radar sensor arrangement 4a, 4b is manufactured for cost reasons. When mounted, they will be mounted upside-down relative to each other in order to enable the antenna devices to face the same direction. This will also result in that the antenna devices will be positioned at different heights from the ground which enables acquiring elevation data, not only azimuth data.

Azimuth multipath can be used for increasing the ability to determine distances between different parts of an object in front of the vehicle 1, since transmitted signals from the radar sensor arrangements 4a, 4b will be reflected back along several different paths. Each radar sensor arrangement 4a, 4b can be used for detecting multipath signals that have been transmitted from the other radar sensor arrangement, increasing the amount of available data.

Wordings such as simultaneous are not intended to be understood as mathematically exact, but within what is practically obtainable.

In this context, a radar cycle is according to some aspects one observation phase during which the vehicle radar system (3) is arranged to acquire data, process said data on several signal processing levels and to send out available results. This can be a fixed time interval or a dynamic time interval depending on environment conditions and processing load.

The radar sensor arrangements (4a, 4b) are arranged to transmit any suitable radar signals, which can be TDM (Time division multiplexed) radar signals. FMCW is a kind of TDM radar signals.

Generally, the present disclosure relates to a vehicle radar system 3 comprising a main control unit 38, a first radar sensor arrangement 4a and a second radar sensor arrangement 4b, which radar sensor arrangements 4a, 4b are arranged to be mounted at the front of a vehicle 1 arranged to run along a forward direction F, where the radar sensor arrangements 4a, 4b are separated by a certain distance d and comprise a corresponding transmitter antenna arrangement 10a, 10b and corresponding receiver antenna arrangement 13a, 13b, where each receiver antenna arrangement 13a, 13b has a corresponding receiver antenna radiation beam 47a, 47b with a corresponding beam pointing azimuth angle $\varphi_1$, $\varphi_2$ relative the forward direction F in a corresponding maximum gain extension 46a, 46b, where the maximum gain extension 46a, 46b converge for beam pointing azimuth angles $\varphi_1$, $\varphi_2$ exceeding 0°, where each radar sensor arrangement 4a, 4b is arranged for generating and transmitting radar signals 6a, 6b in radar cycles, and to receive reflected signals 7a, 7b, where the transmitted radar signals 6a, 6b have been reflected by an object 5. The radar sensor arrangements 4a, 4b are arranged to transmit the radar signals 6a, 6b during a common time period for a major part of each radar cycle, where the main control unit 38 is arranged to obtain information regarding the time for transmission of each plurality of radar signals 6a, 6b for each radar sensor arrangement 4a, 4b.

According to some aspects, the beam pointing

azimuth angles $\varphi_1$, $\varphi_2$ have a respective value between 0° and 1.5°.

According to some aspects, each radar sensor arrangement 4a, 4b is arranged for generating and transmitting FMCW, Frequency Modulated Continuous Wave, chirp signals, where each radar cycle comprises a plurality of chirp signals 6a, 6b.

According to some aspects, the main control unit 38 is arranged to insert at least one identifiable data signal 40a, 40b; 41a, 41b for each radar cycle.

According to some aspects, each identifiable data signal 40a, 40b comprises a synchronization.

According to some aspects, each identifiable data signal 41a, 41b comprises a time indication.

According to some aspects, the time indication includes time-stamping on data frames of raw data of the MMIC Monolithic Microwave Integrated Circuits.

According to some aspects, the main control unit 38 is arranged to control the coherency of the received reflected signals 7a, 7b by means of said identifiable data signals 40a, 40b; 41a, 41b.

According to some aspects, the vehicle radar system 3 comprises a main clock 26 that is arranged as a system clock for the main control unit 38, and that each radar sensor arrangement 4a, 4b comprises a corresponding local clock 24a, 24b and a corresponding local control unit 25a, 25b.

According to some aspects, the main control unit 38 is arranged to acquire time data from the main clock 26 and to synchronize the local clocks 24a, 24b.

According to some aspects, the main control unit 38 is arranged to control a phase difference between the received radar signals 7a, 7b for synchronization to enable coherency control of the received radar signals 7a, 7b in time domain or frequency domain.

According to some aspects, the main control unit 38 is arranged to combine the two receiver antenna radiation beams 47a, 47b such that an overlap area 28 is provided, where the overlap area 28 enables overlap processing.

According to some aspects, the transmitter antenna devices 10a1, 10a2 are arranged to transmit by means of a first relative antenna radiation pattern 40 and by means of a second relative antenna radiation pattern diagram 41, where the first relative antenna radiation pattern 40 is obtained by feeding two transmitter antenna devices 10a1, 10a2 in phase, while the second relative antenna radiation pattern diagram 41 is obtained by feeding two transmitter antenna devices 10a1, 10a2 out of phase with each other.

Generally, the present disclosure also relates to a method for a vehicle radar system 3, where the method comprises:

> 48: generating at least two receiver antenna radiation beams 47a, 47b with a corresponding beam pointing azimuth angle $\varphi_1$, $\varphi_2$ relative a forward direction F in a corresponding maximum gain extension 46a, 46b, where the maximum gain extension 46a, 46b converge for beam pointing azimuth angles $\varphi_1$, $\varphi_2$ exceeding 0°;
49: generating and transmitting radar signals 6a, 6b in radar cycles; and
50: receiving reflected signals 7a, 7b, where the transmitted radar signals 6a, 6b have been reflected by an object 5.

The method further comprises:

> 51: transmitting the radar signals 6a, 6b during a common time period for a major part of each radar cycle; and
> 52: obtaining information regarding the time for transmission of each plurality of radar signals 6a, 6b for each radar sensor arrangement 4a, 4b.

According to some aspects, the beam pointing azimuth angles $\varphi_1$, $\varphi_2$ have a respective value between 0° and 1.5°.

## Claims

1. A vehicle radar system (3) comprising a main control unit (38), a first radar sensor arrangement (4a) and a second radar sensor arrangement (4b), which radar sensor arrangements (4a, 4b) are arranged to be mounted at the front of a vehicle (1) arranged to run along a forward direction (F), where the radar sensor arrangements (4a, 4b) are separated by a certain distance (d) and comprise a corresponding transmitter antenna arrangement (10a, 10b) and corresponding receiver antenna arrangement (13a, 13b), where each receiver antenna arrangement (13a, 13b) has a corresponding receiver antenna radiation beam (47a, 47b) with a corresponding beam pointing azimuth angle ($\varphi_1$, $\varphi_2$) relative the forward direction (F) in a corresponding maximum gain extension (46a, 46b), where the maximum gain extension (46a, 46b) converge for beam pointing azimuth angles ($\varphi_1$, $\varphi_2$) exceeding 0°, where each radar sensor arrangement (4a, 4b) is arranged for generating and transmitting radar signals (6a, 6b) in radar cycles, and to receive reflected signals (7a, 7b), where the transmitted radar signals (6a, 6b) have been reflected by an object (5), **characterized in that** the radar sensor arrangements (4a, 4b) are arranged to transmit the radar signals (6a, 6b) during a common time period for a major part of each radar cycle, where the main control unit (38) is arranged to obtain information regarding the time for transmission of each plurality of radar signals (6a, 6b) for each radar sensor arrangement (4a, 4b).

2. The vehicle radar system (3) according to claim 1, **characterized in that** the beam pointing azimuth

angles ($\varphi_1$, $\varphi_2$) have a respective value between 0° and 1.5°.

3. The vehicle radar system (3) according to any one of the claims 1 or 2, **characterized in that** each radar sensor arrangement (4a, 4b) is arranged for generating and transmitting FMCW, Frequency Modulated Continuous Wave, chirp signals, where each radar cycle comprises a plurality of chirp signals (6a, 6b).

4. The vehicle radar system (3) according to any one of the previous claims, **characterized in that** the main control unit (38) is arranged to insert at least one identifiable data signal (40a, 40b; 41a, 41b) for each radar cycle.

5. The vehicle radar system (3) according to claim 4, **characterized in that** each identifiable data signal (40a, 40b) comprises a synchronization.

6. The vehicle radar system (3) according to any one of the claims 4 or 5, **characterized in that** each identifiable data signal (41a, 41b) comprises a time indication.

7. The vehicle radar system (3) according to claim 6, **characterized in that** the time indication includes time-stamping on data frames of raw data of the MMIC (Monolithic Microwave Integrated Circuits).

8. The vehicle radar system (3) according to any one of the claims 4-7, **characterized in that** the main control unit (38) is arranged to control the coherency of the received reflected signals (7a, 7b) by means of said identifiable data signals (40a, 40b; 41a, 41b).

9. The vehicle radar system (3) according to any one of the previous claims, **characterized in that** the vehicle radar system (3) comprises a main clock (26) that is arranged as a system clock for the main control unit (38), and that each radar sensor arrangement (4a, 4b) comprises a corresponding local clock (24a, 24b) and a corresponding local control unit (25a, 25b).

10. The vehicle radar system (3) according to claim 9, **characterized in that** the main control unit (38) is arranged to acquire time data from the main clock (26) and to synchronize the local clocks (24a, 24b).

11. The vehicle radar system (3) according to any one of the previous claims, **characterized in that** the main control unit (38) is arranged to control a phase difference between the received radar signals (7a, 7b) for synchronization to enable coherency control of the received radar signals (7a, 7b) in time domain or frequency domain.

12. The vehicle radar system (3) according any one of the previous claims, **characterized in that** the main control unit (38) is arranged to combine the two receiver antenna radiation beams (47a, 47b) such that an overlap area (28) is provided, where the overlap area (28) enables overlap processing.

13. The vehicle radar system (3) according to any one of the previous claims, **characterized in that** the transmitter antenna devices (10a1, 10a2) are arranged to transmit by means of a first relative antenna radiation pattern (40) and by means of a second relative antenna radiation pattern diagram (41), where the first relative antenna radiation pattern (40) is obtained by feeding two transmitter antenna devices (10a1, 10a2) in phase, while the second relative antenna radiation pattern diagram (41) is obtained by feeding two transmitter antenna devices (10a1, 10a2) out of phase with each other.

14. A method for a vehicle radar system (3), where the method comprises:

(48) generating at least two receiver antenna radiation beams (47a, 47b) with a corresponding beam pointing azimuth angle ($\varphi_1$, $\varphi_2$) relative a forward direction (F) in a corresponding maximum gain extension (46a, 46b), where the maximum gain extension (46a, 46b) converge for beam pointing azimuth angles ($\varphi_1$, $\varphi_2$) exceeding 0°;
(49) generating and transmitting radar signals (6a, 6b) in radar cycles; and
(50) receiving reflected signals (7a, 7b), where the transmitted radar signals (6a, 6b) have been reflected by an object (5), **characterized in that** the method comprises:
(51) transmitting the radar signals (6a, 6b) during a common time period for a major part of each radar cycle; and
(52) obtaining information regarding the time for transmission of each plurality of radar signals (6a, 6b) for each radar sensor arrangement (4a, 4b).

15. The method according to claim 14, **characterized in that** the beam pointing azimuth angles ($\varphi_1$, $\varphi_2$) have a respective value between 0° and 1.5°.

FIG. 1

FIG. 2

FIG. 3

FIG. 4

10a2

10a1

10a

$0°$ — 15a

r

FIG. 5

10a2

10a1

10a

$180°$ — 15a

r

FIG. 6

[dB]

0

-20

-40

-60

-80

40

4/8

-90°   -45°   0°   45°   90°

FIG. 7

[dB]

0

-20

-40

-60

-80

41

-90°   -45°   0°   45°   90°

FIG. 8

42

1.0

0.5

0

-0.5

-1.0

-90°　　-45°　　0°　　45°　　90°

FIG. 9

57

13a2

13a3

13a4

13a1

13a

k·λ　k·λ　k·λ

FIG. 10

Generating antenna
radiation beams — 48

Generating and
transmitting radar
signals — 49

Receiving reflected
signals — 50

Transmitting radar
signals during
common time — 51

Obtaining information — 52

FIG. 11

Europäisches
Patentamt

European
Patent Office

Office européen
des brevets

# EUROPEAN SEARCH REPORT

**Application Number**

EP 17 17 6781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 056800 A1 (VALEO SCHALTER & SENSOREN GMBH [DE]) 31 May 2007 (2007-05-31) * paragraphs [0001] - [0029] * * paragraphs [0042] - [0080] * ----- | 1-15 | INV. G01S13/34 G01S13/87 G01S7/40 G01S7/35 G01S13/00 |
| A | EP 3 056 920 A1 (AUTOLIV DEV [SE]) 17 August 2016 (2016-08-17) * the whole document * ----- | 1-15 | ADD. G01S13/93 |
| A | EP 2 333 578 A2 (BOSCH GMBH ROBERT [DE]) 15 June 2011 (2011-06-15) * the whole document * ----- | 1-15 | |
| A | EP 2 629 115 A1 (HELLA KGAA HUECK & CO [DE]) 21 August 2013 (2013-08-21) * the whole document * ----- | 1-15 | |

**TECHNICAL FIELDS
SEARCHED      (IPC)**

G01S

The present search report has been drawn up for all claims

| Place of search | Date of completion of the search | Examiner |
|---|---|---|
| Munich | 13 December 2017 | Hirsch, Stefanie |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

                                         

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 17 17 6781

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2017

| Patent document cited in search report | Publication date | Patent family member(s) | Publication date |
|---|---|---|---|
| DE 102005056800 A1 | 31-05-2007 | DE 102005056800 A1<br>EP 1955091 A1<br>JP 2009517635 A<br>US 2008211708 A1<br>WO 2007062708 A1 | 31-05-2007<br>13-08-2008<br>30-04-2009<br>04-09-2008<br>07-06-2007 |
| EP 3056920 A1 | 17-08-2016 | EP 3056920 A1<br>WO 2016128284 A1 | 17-08-2016<br>18-08-2016 |
| EP 2333578 A2 | 15-06-2011 | DE 102009047390 A1<br>EP 2333578 A2 | 09-06-2011<br>15-06-2011 |
| EP 2629115 A1 | 21-08-2013 | DE 102012101303 A1<br>EP 2629115 A1<br>US 2013278306 A1 | 22-08-2013<br>21-08-2013<br>24-10-2013 |

EPO FORM P0459

For more details about this annex : see Official Journal of the European Patent Office, No. 12/82